# EUROPÄISCHE PATENTSCHRIFT

(11) **EP 3 585 991 B1**
(45) Veröffentlichungstag und Bekanntmachung des Hinweises auf die Patenterteilung: **31.03.2021**
(21) Anmeldenummer: 18708624.4
(22) Anmeldetag: 23.02.2018
(51) Int. Cl.: F02B 75/04, F01P 3/08, F02D 15/02, F16C 7/06

(54) **VERFAHREN ZUM BETRIEB EINER HUBKOLBENMASCHINE MIT WENIGSTENS EINER HYDRAULISCH LÄNGENVERSTELLBAREN PLEUELSTANGE**
METHOD FOR OPERATING A RECIPROCATING PISTON MACHINE HAVING AT LEAST ONE PISTON ROD THAT IS HYDRAULICALLY ADJUSTABLE IN LENGTH
PROCÉDÉ PERMETTANT DE FAIRE FONCTIONNER UN MOTEUR À PISTONS ALTERNATIFS COMPRENANT AU MOINS UNE BIELLE À LONGUEUR VARIABLE HYDRAULIQUEMENT

(30) Priorität: 24.02.2017 AT 501532017
(43) Veröffentlichungstag der Anmeldung: 01.01.2020
(73) Patentinhaber: AVL List GmbH, 8020 Graz (AT)
(72) Erfinder: LÖSCH, Siegfried, 8713 St. Stefan ob Leoben (AT); FÜRHAPTER, Alois, 8051 Thal (AT); HEIMEL, Gerhard, 8045 Graz (AT); KOMETTER, Bernhard, 8111 Judendorf (AT); GREBE, Uwe Dieter, 8052 Graz (AT)
(74) Vertreter: Breuer Friedrich Hahner Patentanwälte PartG mbB
(86) Internationale Anmeldenummer: PCT/EP2018/054468
(87) Internationale Veröffentlichungsnummer: WO 2018/154035

(56) Entgegenhaltungen:
- WO-A1-2016/042605
- WO-A2-2015/055582
- AT-B1- 517 217
- JP-A- 2003 129 817
- US-A1- 2009 205 615

## Beschreibung

Die Erfindung betrifft eine Hubkolbenmaschine, insbesondere eine Brennkraftmaschine, mit wenigstens einer hydraulisch lenkverstellbaren Pleuelstange zum Einstellen eines Verdichtungsverhältnisses ε, wobei die Pleuelstange einen Kolben und einen Hydraulikzylinder zur Längenverstellung aufweist, wobei der Kolben mit dem Hydraulikzylinder wenigstens einen Arbeitsraum begrenzt, durch dessen Füllstand wenigstens zwei Schaltstellungen der Pleuelstange möglich sind. Des Weiteren betrifft die Erfindung ein Verfahren zum Betrieb einer solchen Hubkolbenmaschine.

Durch Ändern des Verdichtungsverhältnisses einer Hubkolbenmaschine kann im Antriebsmodus eine Volllast mit geringem Verdichtungsverhältnis ε und eine Teillast und das Starten der Hubkolbenmaschine mit einem erhöhten Verdichtungsverhältnis ε betrieben werden. Dadurch wird im Teillastbereich der Verbrauch verringert, beim Start der Kompressionsdruck mit erhöhtem Verdichtungsverhältnis ε gesteigert und bei hoher Leistung der Spitzendruck mit verringertem Verdichtungsverhältnis ε reduziert sowie Klopfen verhindert.

Die Druckschrift WO 2015/055582 A2 betrifft eine längenverstellbare Pleuelstange für eine Hubkolbenmaschine mit veränderbarem Verdichtungsverhältnis, wobei die Pleuelstange zumindest einen ersten Stangenteil mit einem kleinen Pleuelauge und einen zweiten Stangenteil mit einem großen Pleuelauge, welche beiden Stangenteile teleskopartig zu- und/oder ineinander verschiebbar sind, wobei der zweite Stangenteil einen Führungszylinder und der erste Stangenteil ein im Führungszylinder längsverschiebbares Kolbenelement ausbilden, wobei auf der dem großen Pleuelauge zugewandten Seite des Kolbenelements zwischen dem zweiten Stangenteil und dem Kolbenelement ein erster Hochdruckraum aufgespannt ist, in den zumindest ein erster Ölkanal einmündet, in welchem insbesondere ein in Richtung des ersten Hochdruckraumes öffnendes erstes Rückschlagventil angeordnet ist, wobei vom ersten Hochdruckraum zumindest ein erster Rücklaufkanal ausgeht, dessen Abflussquerschnitt durch ein Steuerventil in einer ersten Stellung verschließbar und in einer zweiten Stellung freigebbar ist, wobei vorzugsweise das Steuerventil einen in einer Aufnahmebohrung des zweiten Stangenteils der Pleuelstange axial verschiebbaren Stellkolben aufweist, welcher insbesondere durch eine Rückstellfeder in die erste Stellung und durch eine Betätigungskraft entgegen der Kraft der Rückstellfeder in die zweite Stellung verschiebbar ist, wobei das Kolbenelement als zweiseitig wirkender Kolben, vorzugsweise als Stufenkolben, ausgebildet ist.

Auch ist bekannt, statt einem teleskopartigen System zur Verstellung des Verdichtungsverhältnisses ε ein exzentrisch angeordnetes kleines Pleuelauge, einen exzentrischen Kolbenbolzen oder einen exzentrischen Hubzapfen der Kurbelwelle einzusetzen.

So betrifft die Druckschrift DE 10 2014 004 987 A1 eine VCR-Kolbenmaschine mit einem Pleuel, welches einen Verdichtungskolben aufweist, wobei das Pleuel einen Verstellmechanismus zur Verstellung des Verdichtungskolbens aufweist und der Verstellmechanismus einen ersten Stützkolben in einem ersten Stützzylinder und einen zweiten Stützkolben in einem zweiten Stützzylinder des Pleuels aufweist, wobei der erste und der zweite Stützzylinder jeweils mit einer ersten Steuerleitung verbunden sind, über die ein Medium in den jeweiligen Stützzylinder ein- und ausfließt zum Verstellen des jeweiligen Stützzylinders, wobei in zumindest einen der beiden Stützzylinder zumindest eine weitere, zweite Steuerleitung zum zumindest Abfließen des Medium zum Verstellen des zugeordneten Stützzylinders mündet.

Im Allgemeinen wird die Pleuellänge kennfeldabhängig zwischen wenigstens einer langen und einer kurzen Schaltstellung variiert, wobei die erste lange Schaltstellung ein hohes Verdichtungsverhältnis und die zweite, kurze Schaltstellung ein geringes Verdichtungsverhältnis ε bewirkt. Je nach Fahrmodus und der dadurch angeforderten Last bleibt die Länge des Pleuels unverändert. Erst wenn das Verdichtungsverhältnis ε auf einen anderen Wert eingestellt werden soll, zum Beispiel beim Wechseln vom Volllast-Bereich in einen Teillast-Bereich, wird auch das Verdichtungsverhältnis ε und damit die Länge der Pleuelstange verändert.

Es ist eine Aufgabe der Erfindung, eine Hubkolbenmaschine und ein Verfahren zum Betrieb einer solchen Hubkolbenmaschine bereitzustellen, welche die Funktion wenigstens einer hydraulisch längenverstellbaren Pleuelstange der Hubkolbenmaschine gewährleistet. Insbesondere ist es eine Aufgabe der Erfindung, ein Überhitzen eines Hydraulikmediums, welches zur Längenverstellung der hydraulisch längenverstellbaren Pleuelstange eingesetzt wird, zu verhindern. Dies ist in US 2009/0205615 A1 dadurch gelöst, dass das Hydraulikmedium bei jeder Kurbelwellenumdrehung ausgetauscht wird.

Diese Aufgabe wird durch ein Verfahren nach Anspruch 1 und eine Hubkolbenmaschine nach Anspruch 12 gelöst. Vorteilhafte Ausgestaltungen werden in den abhängigen Ansprüchen beansprucht. Die Ansprüche werden ausdrücklich zum Bestandteil der Beschreibung gemacht.

Ein erster Aspekt der Erfindung betrifft ein Verfahren zum Betrieb einer Hubkolbenmaschine, insbesondere einer Brennkraftmaschine, mit wenigstens einer hydraulisch längenverstellbaren Pleuelstange zum Einstellen eines Verdichtungsverhältnisses ε, wobei die Pleuelstange einen Kolben und einen Hydraulikzylinder zur Längenverstellung aufweist, wobei der Kolben mit dem Hydraulikzylinder wenigstens einen Arbeitsraum begrenzt, durch dessen Füllstand wenigstens zwei Schaltstellungen der Pleuelstange möglich sind, wobei unabhängig vom Einstellen des Verdichtungsverhältnisses ε ein wenigstens teilweises Befüllen und Entleeren des Arbeitsraums in Abhängigkeit von wenigstens einer ersten vorbestimmten Bedingung durchgeführt wird, um einen wenigstens teilweisen Austausch eines Hydraulikmediums in dem wenigstens einen Arbeitsraum zu bewirken.

Ein zweiter Aspekt der Erfindung betrifft eine Hubkolbenmaschine, insbesondere Brennkraftmaschine, mit wenigstens einer hydraulisch längenverstellbaren Pleuelstange zum Einstellen des Verdichtungsverhältnisses ε, wobei die Pleuelstange einen Kolben mit einem Hydraulikzylinder zur Längenverstellung aufweist, wobei der Kolben mit dem Hydraulikzylinder wenigstens einen Arbeitsraum begrenzt, durch dessen Füllstand wenigstens zwei Schaltstellungen der Pleuelstange möglich sind, wobei die Hubkolbenmaschine des Weiteren Mittel zum Durchführen, in Abhängigkeit von wenigstens einer ersten vorbestimmten Bedingung und unabhängig vom Einstellen des Verdichtungsverhältnisses ε, eines wenigstens teilweisen Befüllens und Entleerens des wenigstens einen Arbeitsraums aufweist, um einen wenigstens teilweisen Austausch eines Hydraulikmediums in dem wenigstens einen Arbeitsraum zu bewirken.

Die Erfindung beruht insbesondere auf der Erkenntnis, dass auf dem relativ kleinen Volumen des Hydraulikzylinders durch den Kolben, welcher den Drücken im Arbeitsraum der Brennkraftmaschine ausgesetzt ist, hohe Belastungen einwirken. Diese führen zu einem Anstieg der Temperatur des Hydraulikmediums in den Arbeitsräumen (Druckkammern der Hydraulikzylinder). Insbesondere wenn das Hydraulikmedium für längere Zeit in dem Hydraulikzylinder verweilt, kann es dabei zu Alterungseffekten des Hydraulikmediums, insbesondere durch Überhitzen, kommen. Dabei können insbesondere Additive in dem Hydraulikmedium chemisch zersetzt bzw. zerstört werden. Dieser Effekt wird noch dadurch begünstigt, da bei einer Brennkraftmaschine Abwärme aus dem Verbrennungsprozess durch Strahlung und Wärmeleitung auf den Hydraulikzylinder wirkt.

Die Erfindung verfolgt den Ansatz, durch ein Befüllen und Entleeren einen Austausch des Hydraulikmediums herbeizuführen, obwohl keine Veränderung des Verdichtungsverhältnisses ε eingestellt werden soll. Vorzugsweise weist das Verdichtungsverhältnis ε dabei vor und nach dem Befüllen und Entleeren im Wesentlichen den gleichen Wert auf.

Durch den Austausch des Hydraulikmediums können Alterungseffekte verhindert werden. Insbesondere kann ein Verstopfen der Leitungen des Hydraulikmediums in der längenverstellbaren Pleuelstange oder in der Kurbelwelle verhindert werden oder zumindest die Wahrscheinlichkeit eines solchen Vorfalls verringert werden.

Wenigstens eine Arbeitsraum kann hierbei vollständig befüllt und entleert werden. Vorzugsweise wird jedoch nur ein teilweises Befüllen und Entleeren ausgeführt, so dass nur ein Teil des Hydraulikmediums ausgetauscht wird.

In einer vorteilhaften Ausgestaltung der Erfindung begrenzt der Kolben mit dem Hydraulikzylinder zwei Arbeitsräume, durch deren jeweiligen Füllstand die wenigstens zwei Schaltstellungen der Pleuelstange möglich sind, wobei die Arbeitsräume jeweils gegenläufig gefüllt und entleert werden.

Erfindungsgemäss wird das wenigstens teilweise Befüllen und Entleeren des wenigstens einen Arbeitsraums bei einem niedrigen Lastpunkt, insbesondere unterhalb der halben maximalen Last und/oder im niedrigen Drehmoment, insbesondere unterhalb des halben maximalen Drehmoments, durchgeführt. Durch das Befüllen und Entleeren bei einem relativ niedrigen Lastpunkt wird gewährleistet, dass die Pleuelstange in der langen Schaltstellung, welche beim Befüllen und Entleeren wenigstens durchlaufen wird, nicht zu großen Belastungen ausgesetzt wird, welche zu Schäden an der längenverstellbaren Pleuelstange führen könnten. Wie eingangs erwähnt, liegt der lange Schaltzustand zum Einstellen eines hohen Verdichtungsverhältnisses ε im Allgemeinen im unteren Teillast-Bereich vor.

In einer weiteren vorteilhaften Ausgestaltung des erfindungsgemäßen Verfahrens wird eine Einspritzmenge eines Brennstoffs und/oder das Lambda-Verhältnis eines Zylinders der Brennkraftmaschine, welche die wenigstens eine hydraulisch längenverstellbare Pleuelstange aufweist, vorübergehend angepasst, um eine Last in Bezug auf den Zylinder zu verringern, insbesondere wenn eine kurze Schaltstellung vorliegt. Insbesondere bei einem Befüllen und Entleeren des Arbeitsraums, ausgehend von einer kurzen Schaltstellung, bei der, wie eingangs erläutert, im Allgemeinen eine hohe Last vorliegt, ist es vorteilhaft, die Last zu verringern. Hierdurch kann eine etwaige Beschädigung der längenverstellbaren Pleuelstange vermieden werden.

In einer weiteren vorteilhaften Ausgestaltung des erfindungsgemäßen Verfahrens wird die wenigstens eine hydraulisch längenverstellbare Pleuelstange zur Kühlung mit Kühlmedium, insbesondere mit Hydraulikmedium, und/oder einem Schmiermedium besprüht. Vorzugsweise wird dieses Besprühen durch eine Kolbenkühlungseinrichtung ausgeführt, welche zusätzlich die wenigstens eine hydraulisch längenverstellbare Pleuelstange benetzt. Hierdurch kann unabhängig oder zusätzlich zu einem Austausch des Hydraulikmediums ein Alterungseffekt des Hydraulikmediums verhindert werden, indem die Pleuelstange von außen gekühlt wird.

In einer weiteren vorteilhaften Ausgestaltung der Erfindung wird das Besprühen der Pleuelstange in Abhängigkeit von wenigstens einer zweiten vorbestimmten Bedingung eingeleitet, insbesondere bevor das wenigstens teilweise Befüllen und Entleeren eines Arbeitsraums durchgeführt wird. Gemäß dieser vorteilhaften Ausgestaltung wird ein Befüllen und Entleeren des Arbeitsraums zum wenigstens teilweisen Austausch des Hydraulikmediums erst dann ausgeführt, wenn eine Kühlung mittels des Besprühens mit dem Kühlmedium nicht mehr ausreicht. Hierdurch kann eine zeitweise Abweichung von der optimalen Pleuellänge verhindert oder wenigstens auf eine minimale Dauer beschränkt werden.

In einer weiteren vorteilhaften Ausgestaltung des erfindungsgemäßen Verfahrens bezieht sich die wenigstens eine erste und/oder zweite vorbestimmte Bedingung auf einen Parameter, welcher aus einer Gruppe ausgewählt ist, welche folgende Parameter aufweist: Temperatur des Hydraulikmediums, Zeitdauer seit dem Verändern des Verdichtungsverhältnisses ε, Zeitdauer seit einem letzten, wenigstens teilweisen Austausch des Hydraulikmediums, Menge des bei einem letzten, wenigstens teilweisen Austausch des Hydraulikmediums ausgetauschten Hydraulikmediums, Schaltstellung, Lastpunkt.

In einer weiteren vorteilhaften Ausgestaltung des erfindungsgemäßen Verfahrens erfolgt ein Befüllen und Entleeren bei einer Hubkolbenmaschine mit mehreren hydraulisch längenverstellbaren Pleuelstangen in Bezug auf die Pleuelstangen nacheinander. Hierdurch kann verhindert werden, dass durch das Befüllen und Entleeren eine wahrnehmbare Veränderung in der Fahrbarkeit eines Fahrzeugs mit einer erfindungsgemäßen Hubkolbenmaschine wahrgenommen werden kann.

Die im Vorhergehenden in Bezug auf das Verfahren gemäß dem ersten Aspekt der Erfindung beschriebenen Vorteile und Merkmale gelten entsprechend für die Hubkolbenmaschine gemäß dem zweiten Aspekt der Erfindung und umgekehrt.

In einer vorteilhaften Ausgestaltung der erfindungsgemäßen Hubkolbenmaschine mit einer hydraulisch längenverstellbaren Pleuelstange zum Einstellen eines Verdichtungsverhältnisses ε und einer Kolbenkühlungseinrichtung ist die Kolbenkühlungseinrichtung in der Weise eingerichtet, um auch die Pleuelstange mit einem Kühlmedium, insbesondere einem Hydraulikmedium und/oder einem Schmiermedium, zu besprühen.

In einer weiteren vorteilhaften Ausgestaltung der erfindungsgemäßen Hubkolbenmaschine weist die Kolbenkühlungseinrichtung wenigstens eine Sprühdüse auf, welche auf wenigstens einen Abschnitt eines Bewegungsbereichs der Pleuelstange gerichtet ist.

Weitere Vorteile und Merkmale ergeben sich aus der nachfolgenden Beschreibung von Ausführungsbeispielen der Erfindung in Bezug auf die Figuren. Es zeigt:
- Fig. 1: eine längenverstellbare Pleuelstange im Sinne der Erfindung;
- Fig. 2: die längenverstellbare Pleuelstange nach Fig. 1 in zwei verschiedenen Schaltstellungen;
- Fig. 3: ein erstes Ausführungsbeispiel einer erfindungsgemäßen Hubkolbenmaschine; und
- Fig. 4: ein zweites Ausführungsbeispiel einer erfindungsgemäßen Hubkolbenmaschine.

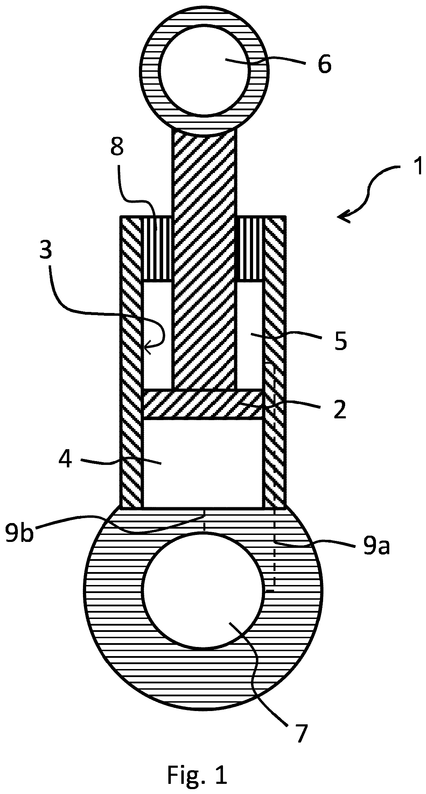

Fig. 1 zeigt eine Ausführungsform einer längenverstellbaren Pleuelstange 1, wie sie in einer erfindungsgemäßen Hubkolbenmaschine 10 zum Einsatz kommen kann.

Die Pleuelstange weist vorzugsweise ein kleines Pleuelauge 6 und ein großes Pleuelauge 7 auf. Das kleine Pleuelauge 6 ist hierbei über einen Schaft mit einem Kolben 2 verbunden. Das große Pleuelauge 7 ist mit einem Hydraulikzylinder 3 verbunden, in welchem der Kolben 2 beweglich angeordnet ist. Der Kolben 2 teilt den Hydraulikzylinder 3 dabei vorzugsweise in zwei Arbeitsräume 4, 5. Der zweite Arbeitsraum 5 wird durch eine Hülse 8 vorzugsweise nach außen hin verschlossen. Das Befüllen und Entleeren des ersten Arbeitsraums 4 mit Hydraulikmedium erfolgt vorzugsweise über eine Leitung 9b, insbesondere Hydraulikleitung, welche vorzugsweise in das große Pleuelauge führt. Der zweite Arbeitsraum 5 wird vorzugsweise über eine weitere Leitung 9a befüllt und entleert. Auch diese weitere Leitung 9a führt vorzugsweise in das große Pleuelauge.

Die Versorgung der Leitungen 9a, 9b mit Hydraulikmedium erfolgt vorzugsweise über eine nicht dargestellte Kurbelwelle der Hubkolbenmaschine. Hierbei kann eine Veränderung der Stellung des Kolbens 2 in dem Hydraulikzylinder 3 beispielsweise über verschiedene, an den Leitungen 9a, 9b anliegende Drücke des Hydraulikmediums realisiert werden. Vorzugsweise kann darüber hinaus oder alternativ vorgesehen sein, dass in der Pleuelstange 1 eine Schalteinrichtung zum Schalten des Zuflusses und/oder Abflusses aus den Arbeitsräumen 4, 5 vorgesehen ist. Auch dieses Schaltelement kann mittels verschiedener Drücke, welche durch das Hydraulikmedium bereitgestellt werden, und/oder elektromagnetisch und/oder mechanisch betätigt werden.

Eine längenverstellbare Pleuelstange 1 im Sinne der Erfindung ist jedoch nicht auf die Ausführungsform in Fig. 1 beschränkt. Insbesondere kann es sich bei dem Kolben auch um einen sogenannten Drehkolben handeln, welcher eine Längenverstellung der Pleuelstange mittels einer Arretierung und/oder einer Gewindespindel verhindert oder ermöglicht. Des Weiteren kann der Kolben im Zusammenspiel mit dem Hydraulikzylinder auch dazu eingerichtet sein, die Stellung eines exzentrisch angeordneten kleinen Pleuelauges 6 zu verändern, so dass eine effektive Pleuellänge, das heißt der Abstand zwischen dem Zentrum des großen Pleuelauges 7 und dem Zentrum des kleinen Pleuelauges 6, verändert werden kann.

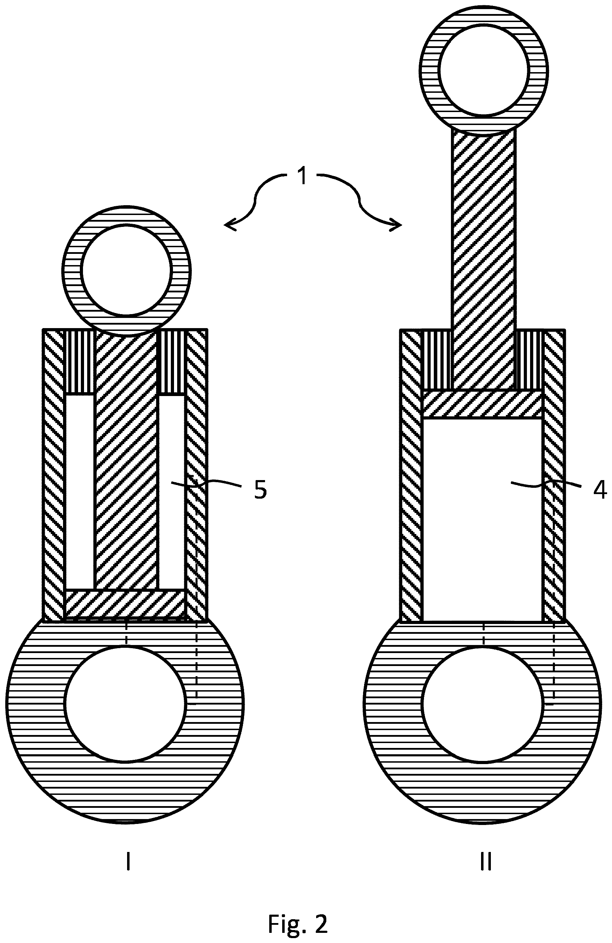

Fig. 2 zeigt zwei Schaltstellungen einer längenverstellbaren Pleuelstange nach Fig. 1. In der ersten, kurzen Schaltstellung ist der erste Arbeitsraum 4 vollständig entleert und/oder der zweite Arbeitsraum 5 vollständig befüllt. In der zweiten, langen Schaltstellung II ist der erste Arbeitsraum 4 vollständig befüllt und/oder der zweite Arbeitsraum 5 vollständig entleert. Die wenigstens zwei Schaltstellungen I, II der Pleuelstange 1 entsprechen damit verschiedenen Längenzuständen der längenverstellbaren Pleuelstange 1. Vorzugsweise wird beim erfindungsgemäßen Befüllen und Entleeren die längenverstellbare Pleuelstange 1 vom Schaltzustand I in den zweiten Schaltzustand II und zurück in den ersten Schaltzustand I überführt. Alternativ wird die Pleuelstange 1 von dem zweiten Schaltzustand II in den ersten Schaltzustand I und zurück in den zweiten Schaltzustand II überführt. Vorzugsweise werden hierbei die Arbeitsräume 4, 5 jeweils vollständig entleert und befüllt, weiter vorzugsweise werden diese nur teilweise entleert und befüllt. Weiter vorzugsweise wird jeweils nur einer der Arbeitsräume 4, 5 wenigstens teilweise befüllt und entleert.

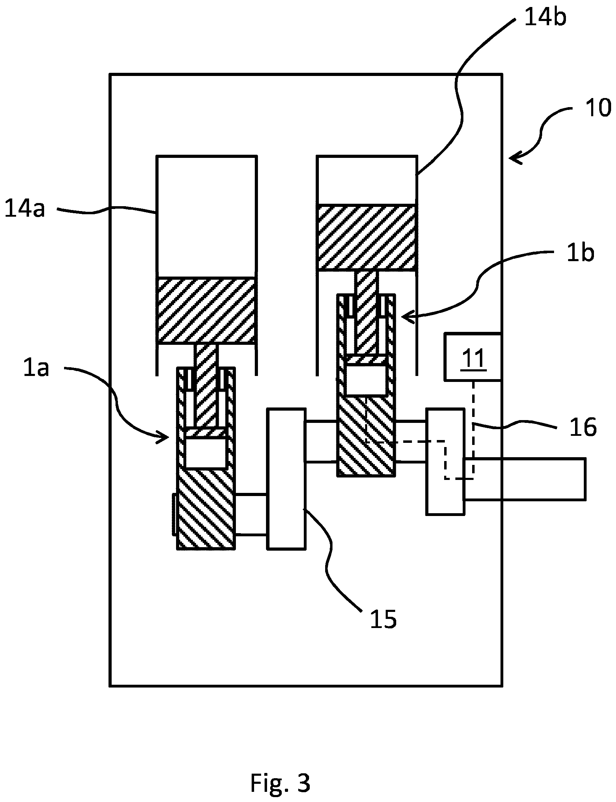

Fig. 3 zeigt ein erstes Ausführungsbeispiel einer erfindungsgemäßen Hubkolbenmaschine 10. Diese weist zwei Zylinder 14a, 14b auf, welche jeweils eine längenverstellbare Pleuelstange 1a und 1b aufweisen, die zusammen mit einem Hubkolben jeweils einen Brennraum in dem Zylinder begrenzen. Die längenverstellbare Pleuelstangen 1a, 1b verbinden dabei jeweils die Hubkolben der Zylinder 14a, 14b mit der Kurbelwelle 15.

Des Weiteren weist die Hubkolbenmaschine 10 eine Steuerung 11 auf, welche über eine Leitung 16, die vorzugsweise durch die Kurbelwelle 15 geführt ist, ein Befüllen und Entleeren wenigstens eines der Arbeitsräume 4, 5 der längenverstellbaren Pleuel 1a, 1b steuert. Die jeweiligen Arbeitsräume 4, 5 der längenverstellbaren Pleuelstange 1a, 1b können hierbei mit einer gemeinsamen Hydraulikleitung 16 oder auch mit getrennten Hydraulikleitungen versorgt werden.

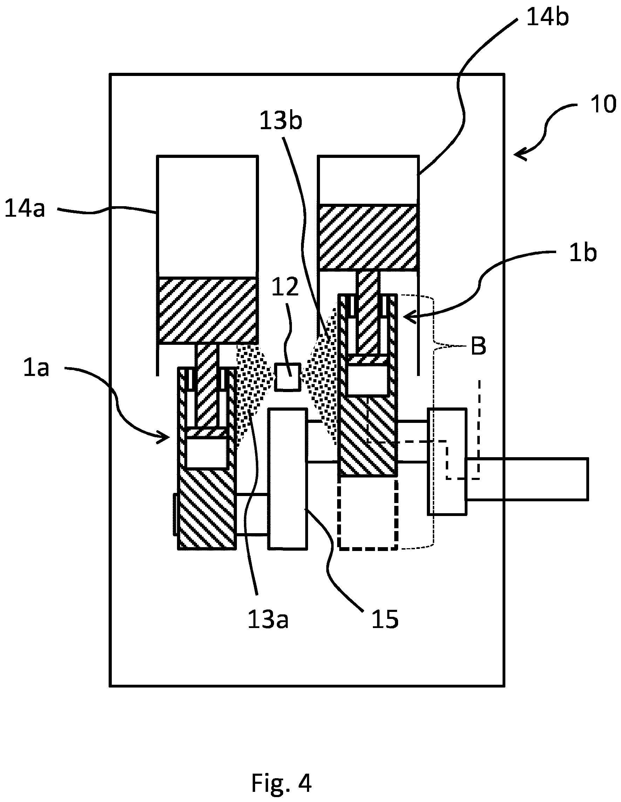

Fig. 4 zeigt ein zweites Ausführungsbeispiel einer erfindungsgemäßen Hubkolbenmaschine 10. Im Unterschied zu dem ersten Ausführungsbeispiel einer erfindungsgemäßen Hubkolbenmaschine 10 nach Fig. 3 weist das zweite Ausführungsbeispiel eine Kühlungseinrichtung 12 auf, welche die längenverstellbare Pleuelstange 1a, 1b der Zylinder 14a, 14b mit einem Kühlmedium, insbesondere Hydraulikmedium, besprühen kann.

Hierfür weist die Kühlungseinrichtung 12, welche vorzugsweise in eine Kolbenkühlungseinrichtung integriert ist, vorzugsweise Sprühdüsen auf, die Sprühkegel 13a, 13b erzeugen, welche die längenverstellbaren Pleuelstangen 1a, 1b in wenigstens einem Abschnitt ihres Bewegungsbereichs B besprühen. In Bezug auf den zweiten Zylinder 14b ist der Bewegungsbereich der zweiten längenverstellbaren Pleuelstange 1b durch gestrichelte Linien und dessen axiale Ausdehnung in Bezug auf den zweiten Zylinder 14b mit einer geschweiften Klammer angedeutet. Als Alternative zu dem in Fig. 4 gezeigten Ausführungsbeispiel kann eine erfindungsgemäße Hubkolbenmaschine zusätzlich Mittel 11 zum Durchführen eines wenigstens teilweisen Befüllens und Entleerens 11 aufweisen. Diese Alternative entspräche jener aus Fig. 3 mit der Kühlungseinrichtung 12 aus Fig. 4.

## Patentansprüche

1. Verfahren zum Betrieb einer Hubkolbenmaschine (10), insbesondere einer Brennkraftmaschine, mit wenigstens einer hydraulisch längenverstellbaren Pleuelstange (1) zum Einstellen eines Verdichtungsverhältnisses ε, wobei die Pleuelstange (1) einen Kolben (2) und einen Hydraulikzylinder (3) zur Längenverstellung aufweist, wobei der Kolben (2) mit dem Hydraulikzylinder (3) wenigstens einen Arbeitsraum (4, 5) begrenzt, durch dessen Füllstand wenigstens zwei Schaltstellungen (I, II) der Pleuelstange (1) möglich sind,
wobei unabhängig vom Einstellen des Verdichtungsverhältnisses ε ein wenigstens teilweises Befüllen und Entleeren des wenigstens einen Arbeitsraums (4, 5) in Abhängigkeit von wenigstens einer ersten vorbestimmten Bedingung durchgeführt wird, um einen wenigstens teilweisen Austausch eines Hydraulikmediums in dem wenigstens einen Arbeitsraum (4, 5) zu bewirken,
wobei das wenigstens teilweise Befüllen und Entleeren des wenigstens einen Arbeitsraums (4, 5) bei einem niedrigem Lastpunkt, insbesondere unterhalb der halben maximalen Last, und/oder niedrigem Drehmoment, insbesondere unterhalb des halben maximalen Drehmoments, durchgeführt wird.

2. Verfahren nach Anspruch 1, wobei das Verdichtungsverhältnisses ε vor und nach dem Befüllen und Entleeren im Wesentlichen den gleichen Wert aufweist.

3. Verfahren nach Anspruch 1 oder 2, wobei der Kolben (2) mit dem Hydraulikzylinder (3) zwei Arbeitsräume (4, 5) begrenzt, durch deren jeweiligen Füllstand die wenigstens zwei Schaltstellungen (I, II) der Pleuelstange (1) möglich sind, wobei die Arbeitsräume (4, 5) jeweils gegenläufig befüllt und entleert werden.

4. Verfahren nach Anspruch 1, wobei eine Einspritzmenge eines Brennstoffs und/oder das Lambda-Verhältnis eines Zylinders der Brennkraftmaschine, welcher die wenigstens eine hydraulisch längenverstellbare Pleuelstange (1) aufweist, vorübergehend angepasst wird, um eine Last in Bezug auf den Zylinder zu verringern, insbesondere, wenn eine kurze Schaltstellung, also eine Schaltstellung, die einer kurzen Länge der Pleuelstange (1) entspricht, vorliegt.

5. Verfahren nach einem der vorhergehenden Ansprüche, wobei die wenigstens eine hydraulisch längenverstellbare Pleuelstange (1) zur Kühlung mit Kühlmedium, insbesondere dem Hydraulikmedium und/oder einem Schmiermedium, besprüht wird.

6. Verfahren nach Anspruch 5, wobei ein Besprühen der Pleuelstange (1) in Abhängigkeit von wenigstens einer zweiten vorbestimmten Bedingung eingeleitet wird, insbesondere bevor das wenigstens teilweise Befüllen und Entleeren eines Arbeitsraums (4, 5) durchgeführt wird.

7. Verfahren nach einem der vorhergehenden Ansprüche, wobei die wenigstens eine erste und/oder zweite vorbestimmte Bedingung sich auf einen Parameter bezieht, welcher aus einer Gruppe ausgewählt ist, welche folgende Parameter aufweist:
Temperatur des Hydraulikmediums, Zeitdauer seit einem Verändern des Verdichtungsverhältnisses ε, Zeitdauer seit einem letzten wenigstens teilweisen Austausch des Hydraulikmediums, Menge des bei einem letzten wenigstens teilweisen Austausch des Hydraulikmediums ausgetauschten Hydraulikmediums, Schaltstellung (I, II), Lastpunkt einer Hubkolbenmaschine mit der längenverstellbaren Pleuelstange (1).

8. Verfahren nach einem der vorhergehenden Ansprüche, wobei ein Befüllen und Entleeren bei einer Hubkolbenmaschine mit mehreren hydraulisch längenverstellbaren Pleuelstangen (1) in Bezug auf die Pleuelstangen nacheinander erfolgt.

9. Elektronische Steuerung, die vorzugsweise einen Speicher und einen Mikroprozessor umfasst, welche eingerichtet ist, um ein Verfahren gemäß einem der Ansprüche 1 bis 8 auszuführen.

10. Computerprogramm, das Anweisungen umfasst, welche, wenn sie von einem Computer ausgeführt werden, diesen dazu veranlassen, die Schritte eines Verfahrens gemäß einem der Ansprüche 1 bis 8 auszuführen.

11. Computerlesbares Medium, auf dem ein Computerprogramm nach Anspruch 10 gespeichert ist.

12. Hubkolbenmaschine (10), insbesondere Brennkraftmaschine, mit wenigstens einer hydraulisch längenverstellbaren Pleuelstange (1a, 1b) zum Einstellen eines Verdichtungsverhältnisses ε, wobei die Pleuelstange (1a, 1b) einen Kolben (2) und einen Hydraulikzylinder (3) zur Längenverstellung aufweist, wobei der Kolben (2) mit dem Hydraulikzylinder (3) wenigstens einen Arbeitsraum (4, 5) begrenzt, durch dessen Füllstand wenigstens zwei Schaltstellungen (I, II) der Pleuelstange (1) möglich sind, wobei die Hubkolbenmaschine (10) des Weiteren Mittel (11) zum Durchführen, in Abhängigkeit von wenigstens einer ersten vorbestimmten Bedingung und unabhängig vom Einstellen des Verdichtungsverhältnisses ε ein wenigstens teilweises Befüllen und Entleeren des wenigstens einen Arbeitsraums (4, 5), aufweist, um einen wenigstens teilweisen Austausch eines Hydraulikmediums in dem wenigstens einen Arbeitsraum (4, 5) zu bewirken,
wobei das wenigstens teilweise Befüllen und Entleeren des wenigstens einen Arbeitsraums (4, 5) bei einem niedrigem Lastpunkt, insbesondere unterhalb der halben maximalen Last, und/oder niedrigem Drehmoment, insbesondere unterhalb des halben maximalen Drehmoments, durchgeführt wird.

13. Hubkolbenmaschine (10) nach Anspruch 12, wenigsten eine hydraulisch längenverstellbare Pleuelstange (1) zum Einstellen eines Verdichtungsverhältnisses ε und eine Kühlungseinrichtung (12) aufweisend, wobei die Kühlungseinrichtung (12) in der Weise eingerichtet ist, um auch die Pleuelstange (1) mit einem Kühlmedium, insbesondere dem Hydraulikmedium und/oder einem Schmiermedium, zu besprühen.

14. Hubkolbenmaschine (10) nach Anspruch 13, wobei die Kühlungseinrichtung (12) wenigstens eine Sprühdüse aufweist, welche auf wenigstens einen Abschnitt eines Bewegungsbereichs B der Pleuelstange gerichtet ist.

## Claims

1. A method for operating a reciprocating piston machine (10), particularly an internal combustion engine, having at least one piston rod (1) which is hydraulically adjustable in length for setting a compression ratio ε, wherein the piston rod (1) comprises a piston (2) and a hydraulic cylinder (3) for adjusting the length, wherein the piston (2) together with the hydraulic cylinder (3) delimits at least one working chamber (4, 5), with the fill level of which enabling at least two switching positions (I, II) of the piston rod (1),
wherein independent of the setting of the compression ratio ε, the at least one working chamber (4, 5) is at least partially filled and emptied as a function of at least one first predetermined condition in order to effect an at least partial exchange of a hydraulic medium in the at least one working chamber (4, 5),
wherein the at least one working chamber (4, 5) is at least partially filled and emptied at a low load point, particularly lower than have the maximum load, and/or at low torque, particularly lower than half the maximum torque.

2. The method according to claim 1, wherein the compression ratio ε has substantially the same value before and after the filling and emptying.

3. The method according to claim 1 or 2, wherein the piston (2) together with the hydraulic cylinder (3) delimits two working chambers (4, 5), with the respective fill level of which enabling at least two switching positions (I, II) of the piston rod (1), wherein the working chambers (4, 5) are oppositely filled and emptied in turn respectively.

4. The method according to claim 1, wherein an amount of fuel injected and/or the lambda ratio of a cylinder of the internal combustion engine with the at least one hydraulically length adjustable connecting rod (1) is temporarily adjusted in order to lower a load relative to the cylinder, particularly when in a short switching position, thus a switching position corresponding to a shorter piston rod (1) length.

5. The method according to one of the preceding claims, wherein the at least one piston rod (1) hydraulically adjustable in length is sprayed with a coolant for cooling purposes, in particular with hydraulic medium and/or a lubricant.

6. The method according to claim 5, wherein spraying of the piston rod (1) is initiated as a function of at least one second predetermined condition, in particular prior to a working chamber (4, 5) being at least partially filled and emptied.

7. The method according to one of the preceding claims, wherein the at least one first and/or second predetermined condition relates to a parameter selected from among a group comprising the following parameters:
hydraulic medium temperature, length of time since compression ratio ε change, length of time since last at least partial hydraulic medium exchange, amount of hydraulic medium exchanged in the last at least partial hydraulic medium exchange, switching position (I, II), load point, of a reciprocating piston machine with the length adjustable piston rod (1).

8. The method according to one of the preceding claims, wherein the piston rods in a reciprocating piston machine having multiple piston rods (1) hydraulically adjustable in length are filled and emptied in succession.

9. An electronic controller probably comprising a memory and a microprocessor which is configured to implement a method according to one of claims 1 to 8.

10. A computer program containing instructions which, when executed by a computer, prompts same to execute the steps of a method according to one of claims 1 to 8.

11. A machine readable medium on which a computer program according to claim 10 is stored.

12. A reciprocating piston machine (10), particularly an internal combustion engine, having at least one piston rod (1a, 1b) which is hydraulically adjustable in length for setting a compression ratio ε, wherein the piston rod (1a, 1b) comprises a piston (2) and a hydraulic cylinder (3) for adjusting the length, wherein the piston (2) together with the hydraulic cylinder (3) delimits at least one working chamber (4, 5), with the fill lever of which enabling at least two switching positions (I, II) of the piston rod (1), wherein the reciprocating piston machine (10) further comprises means (11) for realizing an at least partial filling and emptying of the at least one working chamber (4, 5) as a function of at least a first predetermined condition and independent of the setting of the compression ratio ε in order to effect an at least partial exchange of an hydraulic medium in the at least one working chamber (4, 5),
wherein the at least one working chamber (4, 5) is at least partially filled and emptied at a low load point, particularly lower than have the maximum load, and/or at low torque, particularly lower than half the maximum torque.

13. A reciprocating piston machine (10), particularly according to claim 12, comprising at least one piston rod which is hydraulically adjustable in length for setting a compression ratio ε and a cooling device (12), wherein the cooling device (12) is configured so as to also spray the piston rod (1) with a coolant, in particular a hydraulic medium and/or a lubricant.

14. A reciprocating piston machine (10) according to claim 13, wherein the cooling device (12) comprises at least one spray nozzle directed towards at least one section of a range of travel B of the piston rod.

## Revendications

1. Procédé pour faire fonctionner un moteur à piston alternatif (10), en particulier un moteur à combustion interne, avec au moins une bielle (1) ajustable en longueur hydrauliquement pour régler un rapport de compression ε, dans lequel la bielle (1) présente un piston (2) et un vérin hydraulique (3) pour l'ajustement de longueur, dans lequel le piston (2) délimite avec le vérin hydraulique (3) au moins un espace de travail (4, 5), par le niveau de remplissage duquel au moins deux positions de commutation (I, II) de la bielle (1) sont possibles,
dans lequel indépendamment du réglage du rapport de compression ε, un remplissage et vidage au moins partiel de l'au moins un espace de travail (4, 5) est effectué en fonction d'au moins une première condition prédéfinie pour entraîner un remplacement au moins partiel d'un milieu hydraulique dans l'au moins un espace de travail (4, 5),
dans lequel le remplissage et vidage au moins partiel de l'au moins un espace de travail (4, 5) est effectué à un point de charge bas, en particulier sous la moitié de la charge maximale et/ou à un couple de rotation bas, en particulier sous la moitié du couple de rotation maximal.

2. Procédé selon la revendication 1, dans lequel le rapport de compression ε présente avant et après le remplissage et vidage sensiblement la même valeur.

3. Procédé selon la revendication 1 ou 2, dans lequel le piston (2) délimite avec le vérin hydraulique (3) deux espaces de travail (4, 5), par le niveau de remplissage respectif desquels les au moins deux positions de commutation (I, II) de la bielle (1) sont possibles, dans lequel les espaces de travail (4, 5) sont remplis et vidés respectivement en sens opposé.

4. Procédé selon la revendication 1, dans lequel une quantité d'injection d'un combustible et/ou le rapport lambda d'un vérin du moteur à combustion interne, qui présente l'au moins une bielle (1) ajustable en longueur hydrauliquement, sont adaptés de manière provisoire pour réduire une charge par rapport au vérin, en particulier quand une position de commutation courte, donc une position de commutation qui correspond à une longueur courte de la bielle (1), est présente.

5. Procédé selon l'une quelconque des revendications précédentes, dans lequel l'au moins une bielle (1) ajustable en longueur hydrauliquement est pulvérisée pour le refroidissement de milieu de refroidissement, en particulier du milieu hydraulique et/ou d'un milieu de lubrification.

6. Procédé selon la revendication 5, dans lequel une pulvérisation de la bielle (1) est initiée en fonction d'au moins une deuxième condition prédéfinie, en particulier avant que le remplissage et visage au moins partiel d'un espace de travail (4, 5) ne soit effectué.

7. Procédé selon l'une quelconque des revendications précédentes, dans lequel l'au moins une première et/ou deuxième condition prédéfinie se rapportent à un paramètre, lequel est choisi parmi un groupe, lequel présente des paramètres suivants :
température du milieu hydraulique, durée depuis une modification du rapport de compression ε, durée depuis un dernier remplacement au moins partiel du milieu hydraulique, quantité du milieu hydraulique remplacé lors d'un dernier remplacement au moins partiel du milieu hydraulique, position de commutation (I, II), point de charge d'un moteur à piston alternatif avec la bielle (1) ajustable en longueur.

8. Procédé selon l'une quelconque des revendications précédentes, dans lequel un remplissage et vidage a lieu de manière consécutive pour un moteur à piston alternatif avec plusieurs bielles (1) ajustables en longueur hydrauliquement par rapport aux bielles.

9. Commande électronique, qui comprend de préférence une mémoire et un microprocesseur, laquelle est mise au point pour exécuter un procédé selon l'une quelconque des revendications 1 à 8.

10. Programme informatique, qui comprend des instructions, lesquelles, quand elles sont exécutées par un ordinateur, amènent celui-ci à exécuter les étapes d'un procédé selon l'une quelconque des revendications 1 à 8.

11. Support lisible par ordinateur, sur lequel est mémorisé un programme informatique selon la revendication 10.

12. Moteur à piston alternatif (10), en particulier moteur à combustion interne, avec au moins une bielle (1a, 1b) ajustable en longueur hydrauliquement pour régler un rapport de compression ε, dans lequel la bielle (1a, 1b) présente un piston (2) et un vérin hydraulique (3) pour l'ajustement en longueur, dans lequel le piston (2) délimite avec le vérin hydraulique (3) au moins un espace de travail (4, 5), par le niveau de remplissage duquel au moins deux positions de commutation (I, II) de la bielle (1) sont possibles, dans lequel le moteur à piston alternatif (10) présente par ailleurs des moyens (11) pour effectuer, en fonction d'au moins une première condition prédéfinie et indépendamment du réglage du rapport de compression ε, un remplissage et vidage au moins partiel de l'au moins un espace de travail (4, 5) pour entraîner un remplacement au moins partiel d'un milieu hydraulique dans l'au moins un espace de travail (4, 5),
dans lequel le remplissage et vidage au moins partiel de l'au moins un espace de travail (4, 5) est effectué à un point de charge bas, en particulier sous la moitié de la charge maximale et/ou à un couple de rotation bas, en particulier sous la moitié du couple de rotation maximal.

13. Moteur à piston alternatif (10) selon la revendication 12, présentant au moins une bielle (1) ajustable en longueur hydrauliquement pour régler un rapport de compression ε et un dispositif de refroidissement (12), dans lequel le dispositif de refroidissement (12) est mis au point de manière à pulvériser également la bielle (1) d'un milieu de refroidissement, en particulier du milieu hydraulique et/ou d'un milieu de lubrification.

14. Moteur à piston alternatif (10) selon la revendication 13, dans lequel le dispositif de refroidissement (12) présente au moins une buse de pulvérisation, laquelle est dirigée sur au moins une section d'une zone de déplacement B de la bielle.
